# EUROPEAN PATENT SPECIFICATION

(11) **EP 4 343 714 B1**
(45) Date of publication and mention of the grant of the patent: **01.07.2026**
(21) Application number: 22196456.2
(22) Date of filing: 20.09.2022
(51) Int. Cl.: G06V 10/82, G06V 20/64, G06V 10/44, G06V 10/80, G06V 20/10, G06Q 40/08, G06Q 10/10, G06Q 30/02

(54) **SYSTEM AND METHOD FOR AUTOMATED IMAGE ANALYSIS FOR DAMAGE ANALYSIS**
SYSTEM UND VERFAHREN ZUR AUTOMATISIERTEN BILDANALYSE ZUR SCHADENSANALYSE
SYSTÈME ET PROCÉDÉ D'ANALYSE D'IMAGE AUTOMATISÉE POUR ANALYSE DE DOMMAGES

(43) Date of publication of application: 27.03.2024
(73) Proprietor: MotionsCloud GmbH, 80802 Munich (DE)
(72) Inventor: TAN, Yih Liang, 81671 München (DE); VU, Khuong Duy, 81671 München (DE); PHAM, Van Dat, 81671 München (DE); NGUYEN, Xuan Thang, 81671 München (DE)
(74) Representative: Lorenz Seidler Gossel Part. mbB

(56) References cited:
- WO-A1-2019/214313
- CN-B- 109 614 935
- US-A1- 2020 034 958
- US-B1- 10 521 865
- US-B1- 11 288 789

## Description

The present invention refers to a method and system for an automated and rapid identification and / or evaluation of an area of damage in an object using automated image analysis. The object may be a building, a vehicle, a mobile device, an electronic device, furniture or any other object or part thereof.

Conventionally, if an object is damaged, the owner has to contact his / her insurance company to notify the insurance company about the damage. The insurance company will then usually send an expert to inspect the damage and provide an estimate regarding the cost of repair of the damage. In practice, this process has proven to be labourious and time-intensive and thus costly for all parties involved.

Document WO2019/214313A1 discloses an interactive processing method, apparatus and processing device for vehicle loss assessment and a client terminal. From US11288789B1 systems and methods for repairing a damaged vehicle using image processing are known. US10521865B1 discloses an insurance server for generating a quote associated with an object pictured in a three-dimensional (3D) image. CN109614935B discloses a vehicle damage assessment method and device. US2020/034958A1 discloses a method of damage assessment.

The present disclosure strives to alleviate or even completely solve the problems associated with the prior art. In particular, the present disclosure strives to provide a system and method allowing for a fast, efficient and user friendly management of damage occuring in any object, be it a building, a car, a smratphone or any other object. Furthermore, the present invention strives to assist humans in identifying areas of damage in images or videos of objects and also guide humans through the the process of assessing the severity of a damage.

This technical problem is solved by the system and method as defined in the independent claims. Advantageous embodiments of the disclosure are the subject-matter of the dependent claims.

An aspect of the present disclosure relates to a method for identifying and / or evaluating a damage in an object, as defined in claim 1.

In other words, according to the present disclosure, automated image analysis using a a convolutional neural network and deep learning techniques is used to identify and / or evaluate at least one area of damage to the object. This automated image analysis and damage identification / evaluation supports a human expert in his / her efforts to analyze and / or evaluate a damage done to an object or can even substitute a human expert inspecting the damage.

For example, a user may take images of a damaged object immediately after the damage has happened, using e.g. his or her smartphone. For this purpose, a link to a web application serving as a platform for the damage management can be sent (e.g. via SMS or Email) to the user according to an optional step of a method according to the present invention. The images may also stem from a video originating e.g. from a real-time or recorded CCTV system.

In other words, the method can comprise a step of sending, to a device present at the location of the object, a link providing a designated communication channel configured to submit or transmit the at least two images acquired of the object to another device, e.g. a device comprising a processing unit or control unit configured to construct the three-dimensional model of the object. The link preferably leads the user to a web application, especially configured for guiding the user through the process of damage recognition and / or claim management.

The web application serving as a platform for damage management is preferably configured to guide the user through some or all steps of damage management, for example, documenting the damage by acqui ring pictures, forwarding data regarding the damage to an insurance company and providing a means for communication between the insurance company and the user.

The damaged object can be a building, a vehicle, a mobile device, an electronic device, furniture or any other object or part thereof.

According to an aspect of the present disclosure, the method may comprise a step of performing a remote live inspection allowing a user, e.g. a technical expert from an insurance company, to view the damaged object in real time and preferably also allowing the user, e.g. the technical expert, to remotely acquire images of the object, preferably via a camera of a mobile device.

In other words, the method can comprise a step of providing a separate communication channel between a device present at the location of the object to another device, preferably an electronic device used by another user, e.g. a technical expert, that is configured to allow the technical expert to access the camera of the device present at the location of the object. This allows the technical expert to inspect the object and damage remotely, i.e. without actually being present at the location of the object. Preferably, the communication channel is also configured to allow the technical expert to capture images of the object and / or at least one area of damage by directly accessing or controling the camera of the device present at the location of the object (remote control). This has the advantage that the technical expert can acquire images as he she / deems suitable and with higher resolution compared to images taken e.g. from a continuous video stream.

This step can comprise providing only one separate communication channel for one or more users, such as technical experts, or each user or technical expert can be provided with an individual, separate communication channel.

For example, the remote live inspection may be performed after the damage has been pre-analyzed and / or pre-evaluated by the image processing unit preferably comprising a convolutional neural network. If the pre-analysis indicated a complex damage, such a remote inspection by a human expert may be required. The remote inspection can be performed using a videoconferencing tool, allowing the user to inspect the damaged object in real time.

The step of analyzing the three-dimensional model of the object by means of an image processing unit can comprise first identifying a location of an area of damage in the object, e.g. if the object is a car, a location of the area of damage can be identified as "left side of a bumper".

In order to identify an area of damage, the processing unit can be configured to identify an intact appearance of the object, preferably by accessing a database. For example, based on the acquired images of a damaged car, the processing unit can identify the type of car. Then, the processing unit can access a data base to retrieve information regarding the apperance and / or characteristics of this type of car in an intact or ideal state.

In order to identify areas of damage, the processing unit can be configured to compare the retrieved information relating to the intact apperance of the object to information regarding the apperance and / or characteristics stemming from the three-dimensional model of the object constructed from the at least two images (e.g. compare the apperance of the bumper in the model constructed from the images of the damaged car to how the bumper should look like). If in a given area of the model, an aberrance is detected between the characteristics of the model and the retrieved information relating to the intact apperance of the object, this area can be identified as an area of damage.

If an area of damage has been indentified by the processing unit, the processing unit subsequently preferably assesses the type and or severity of the damage. For this purpose, the processing unit can be configured to extract from the images and / or three-dimensional model of the object features pertaining to the damage e.g. to the size of an idenitifed area of damage, a colour, a location of the area of damage, the depth of e.g. a scratch or indentation etc.

The processing unit can be configured to calculate a numerical severity score for each identified area of damage based on a comparison of extracted features pertaining to an identified area of damage to correspoding characteristics of areas of damage of a similar type stored in a database. For example, if a scratch of 20 cm length and 5mm depth has been identified, the features length= 20 cm and depth= 5 mm are compared to a database of values of lengths and depths of other scratches. Combination features may be used in calculation the severity score. For example, if the data in the data base indicates that usually scratches vary in length between 1 cm and 15 cm and vary in depth between 0,1 mm and 5 mm, the identified scratch is classified as rather severe. The severity score can indicate the severity of a damage e.g. on a numerical scale, such as between 0 and 1 or between 1 and 10 and / or can also include a colour code.

The processing unit can thus analyse and evaluate a three-dimensional model of an object to identify and preferably evaluate (e.g. type of damage, severity of damage) one or more areas of damage.

According to an embodiment of the invention, the processing unit is configured to automatically generate a report comprising information regarding one or more identified areas of damage and / or corresponding evaluation results. This report can then preferably automatically be stored and documented in a database.

The report can also be sent to a user of the device present at the location of the object (e.g. the owner of a damaged car), to a technical expert and / or an insurance company.

The remote live inspection by a human, e.g. a technical expert, as described above can be performed at the same time / simultane ously with the image analysis by the processing unit for identifying and evaluating damages of an object.

Alternatively or additionally, the analysis by the processing unit and the generation of the report can occur as a first step and based on the results of the automated image analysis, it can be decided whether an inspection by a human technical expert is actually required. Thus, the image analysis by the processing unit can serve as an automated pre-analysis offering a human guidance with regards to areas of interest (e.g. areas of damage) and also by ensuring that human experts are only called for inspection if truly necessary.

The processing unit, however, can also analyse the images of the object concurrently with the human expert, thus offering a "second opinion". For example, during a remote live inspection, the processing unit (that can preferably be regarded as an Al-based image analysis engine) may be used to analyse the image stream of the video life inspection or any other images acquired during the life inspection. In this way, the assessment of the damage by the human expert and the automated image analysis system can be performed concurrently.

In this case, the processing unit can be configured to not only analyse and evaluate the three dimensional model constructed from the at least two images of the object, but also to analyse and evaluate, preferably in real time, at least one image and / or section of a video stream acquired of the object during a remote inspection of the object by a human.

Optionally, the user remotely performing the inspection may be granted access and control over a camera system of a mobile device such as a smartphone or tablet of a user present at the site of the damaged object. This allows the user performing the remote inspection to acquirie high quality images of the damaged object.

To increase the accurracy of damage indentification and / or evaluation, in the step of analyzing the three-dimensional model of the object by means of a convolutional neural network to identify and / or evaluate at least one area of damage to the object, sensor data originating from sensors at or in the object and / or from sensors associated with the object can be taken into account.

Many objects such as vehicles, household applicances, buildings etc. are equipped with sensors that detect a state or condition of the object, e.g. a travelling speed, direction, acceleration, inclination, vibrations, moisture, operation of the object etc. This is commonly refrred to as the "internet of things".

According to an embodiment of the invention, the method thus further comprises a step of accessing at least one sensor present on the object and / or associated therewith to retrieve sensor data reflecting a state of the object, in particular an internal state of the object (e.g. the dampness in a wall or a high temperature in an engine suggesting damage to the engine). These data are preferably taken into account by the processing unit when assessing a type of damage and / or a severity of the damage.

For example, when an area of damage in a car is identified and evaluated by a system according to the present disclosure after a car accident, the system may access data from velocity, accelaration and impact sensors present in or on the car to determine the type and severity of the damage. This improves the accurary of the damage identification / evaluation result relative to an analysis of the damage based on image analysis by computer vision techniques alone.

In a ddition to that, the analysis of sensor data allows the detection of damages invisible from the outside of the object that could otherwise not be identified by image analysis.

To ensure that a user present at the site of a damaged object acquires images of the damaged object with an optimal position and from an optimal angle (e.g. to ensure that an appropriate three-dimensional model of the object can be constructed), in the step of acquiring the at least two images an augmented reality technique can be used to guide a user in taking adequate images, preferably by displaying a dynamic virtual frame superimposed on the image to be acquired indicating a desired position of the object in the picture. For example, the user may be prompted to position a damaged car into a virtual frame providing a template for a standardized front view or side view of a car.

The virtual frame is preferably "dynamic" in the sense that it adapts its position superimposed on the image of the object in real time to changes in the position of the object and / or the device used for acquiring the image. In other words, as e.g. a user holding a smartphone used for capturing an image of a car moves around the car, the virtual frame dynamically adapts in shape, size and position to ensure that from each position of the user and thus angle of view of the car, the virtual frame indicates an optimal position of the object / car in the image.

Thus, the processing unit can be configured to provide a dynamic virtual frame superimposed on an aspect or view of the object to assist the user in acquiring the at least two images of the object.

Of course, also a static virtual frame may be used. In this case the user has to move the device used for capturing an image of the object and / or the object to position the object in the frame. This configuration can be useful if a damage is present in a small object that is easily moved.

Alternatively or additionally to the provision of a static frame by augmented reality techniques to assist the user in correctly positioning the object in an image, a dynamic frame may be displayed. Such a dynamic frame can be displayed to capture e.g. the outline of objects in an image or video stream during a life inspection. In this case, the dynamic frame is automatically fitted to retrace the outline or contour of an object that has been identified in an image, preferably automatically.

**In** other words, an dynamic and / or static virtual frame may not only be provided by the processing unit during the acquisiton of images of the object for the pupose of constructing the three-simensional object, but may also be provided during the acquisition of images and or videos during a remote inspection.

**In** any case, automatic image analysis for detecting damages can automatically be triggered once it has been determined that an object has been adequately positioned in an augmented re ality frame.

**In** other words, the method can comprise a step of detecting in an image the location of the object relative to a superimposed dynamic or static virtual reality frame and, if it is detected that the object is positioned in the frame, automatically triggering, preferably by means of a control or processing unit configured for this purpose, the acquisition of images (e.g. by operating a camera accordingly) and / or the analysis and / or evaluation of any acquired images and / or videos by the processing unit.

This offers the advantage that a user e.g. moving a device relative to an object to acquire images of the object does not have to manually trigger the acquisition of an image (and in the process e.g. accidentally change the position of the device) but images are automatically acquired without any active input from the user as the user moves the device relative to the object.

**In** case of a "before and after"- comparison being performed based on images of the damaged object, such a guidance using augmented reality ensures that a user acquires consistent images of the object that facilitate the analysis of identifying areas of damage in the object.

For this purpose, a method of the present invention can involve storing images acquired from an object at a first point in time, wherein the images are preferably annotated based on damage evaluation results of the processing unit and / or a human expert.

If at a second point in time, images of the same object are to be acquired, the processing unit can retrieve information relating to the position of the object in the images of the object taken at the first time point and generate a virtual frame to be used during image acquisition at the second point in time to ensure that the images taken at the second point in time correspond to the images taken at the second point in time.

Augmented reality techniques may also be used in the step of performing a remote live inspection, for example to display data regarding at least one identified area of damage to the user, e.g. the technical expert, superimposed and / or juxtaposed to the damaged object, wherein the data preferably relates to a dimension, size, depth, outline, severity, age, the cost associated with a repair of the damage or any other information regarding the area of damage.

For example, the area of damage may be highlighted by a coloured outline virtually imposed onto an image of the damaged object. In addition to that, the area(s) of damage may be colour-coded according to severity (e.g. severe damage is outlined or shaded in red, light damage is outlined or shaded in green) or any other information regarding the area of damage. This allows the technical expert performing the remote live inspection to review the data from the automated pre-analysis at a single glance when viewing an image of the damaged object.

Preferably, the automated image analysis comprises the step of classifying by means of the processing unit an identified area of damage according to damage type, e.g. such as a scratch, a crack, an indentation, an abrasion, a discoloration, a coating or any other type of damage. The claissification result may impact on further analysis, for example, if the damage is identified as a crack, it is determined that repair is necessary without further detailed analysis of the depth and length of the crack. On the other hand, if the damage is identified as a scratch, e.g. a more superficial damage, further analysis of the scratch regarding its length and width are required to determine whether repair is required and what cost would be associated with the repair.

According to an aspect of the disclosure, the method further comprises the step of evaluating the cost associated with the repair of an identified area of damage and preferably a step of giving an output to a user indicating at least one offer, preferably the best offer, of repair for the identified area of damage.

For this purpose, the processing unit can use the evaluation results pertaining to a given area of damage to access a data base to retrieve information regarding the cost associated with such a damage.

The best offer of repair can relate to the most economical possibility of repair or workshop and / or the possibility of a repair or workshop located closest to the object the damage has been identified in. The "best" offer can be identified based on an input by the user or claimant, e.g. the user may have input a preference for a very fast or very economical repair. For example, in the case of a damaged car, the system according to the present disclosure may provide an output to the user indicating the closest repair shop and the cost of a repair of the identified damage of the car at this closest workshop. This information allows the user, e.g. the owner of the damaged car, to rapidly decide whether and where the car should be repaired.

According to the present disclosure, the method is performed by a web application or a browser-based application. This has the advantage that a user of the method and / or a system according to the present disclosure does not have to install an application on his / her mobile device, such as a smratphone or tablet.

In addition to that, the user, e.g. an owner of a car present at the site of a car accident, preferably does not have to set up a user account prior to using a system according to the present invention. For example, the owner of a damaged car may call an operator of a system according to the present invention via a help line. The operator then sends the car owner via email and / or sms a link to a user platform that guides the car owner through the process of managing the damage, e.g. through the steps of acquiring images to document the damage and the step of communicating the damage to an insurance company.

Instead of acquiring at least two pictures of the object, it is also possible that a video of the object is acquired.

A method according to the present disclosure comprises a fraud detection step in that every image to be analysed for the presence of damage is first checked by means of the processing unit to identify manipulated pixels.

This fraud detection step is performed using abnormality detection techniques to identify at least one pixel that due to a characteristic, e.g. lighting, hue of colours etc. does not fit in with the other pixels of an image and thus is likely to be manipulated. The fraud detection step preferably is performed before the image is analyzed for the detection of damages and can be regarded as a plausibility check. In other words, the processing unit is configured to assess for at least one pixel of at least one image acquired of an object, whther the characteristics of this pixel are consistent with the characteristics of at least one other pixel of the image, and if an inconsistency is detected, output an alert to a user indicating a possibly fraudulent image.

Another aspect of the invention relates to a device, in particular a device comprising a processing unit, configured to perform a method according to the present disclosure. The device may also comprise an image acquisistion unit, such as a camera or CCTV device.

Another aspect of the invention relates to a device, in particular a data storage device, comprising computer-readable instructions that instruct a computer to perform a method according to the present disclosure.

Yet another aspect of the invention relates to a system comprising at least one mobile device and another device, preferably another mobile device or another electronic device such as a computer or central server, wherein the at least one mobile device and the other device are configured to communicate with each other to perform a method according to the present disclosure.

Furthermore, such a system can comprise at least one external sensor device adapted to be present on, in or at an object to monitor the object and / or its surroundings (internet of things). For example, the external sensor device can be protable and e.g. configured to be removably arranged in a car, e.g. on the dashboard, similar to a dash cam.

Of course, the person skilled in the art will be well aware that all features of the present disclosure described above and below in the context of specific embodiments are part of the present disclosure in isolation as well as in any desired combination. **In** addition to that, it should be understood that all features of the invention disclosed in the context of the method according to the invention equally apply to a device or system of the invention and vice versa.

**In** addition to that, it is to be noted that in case of the singular being used referring to any element in this present disclosure, the disclosure is not limited thereto but also contains a disclosure of this element in plural form , and vice versa.

**In** other words, the present disclosure can be described referring to the following exemplary embodiment and enclosed figures describing an exemplary use of the present invention in practice. Further effect, adavantages and features of the invention become apparent from the enclosed figures and corresponding description.
Fig. 1 shows an overview of a method according to the present disclosure, the steps shown in Fig. 1 are further illistrated in Figs. 2 to 6;
Fig. 2 shows in panels a)-e) several steps in that a user is guided through a claim management process by a system according to the present disclosure;
Fig. 3 illustrates in panels a)-d) steps performed during image analysis by the image processsing unit;
Fig. 4 shows an exemplary output provided according to the present invention relating to an estimated cost assciated with the repair of an identified damage;
Fig. 5 illustrates a live remote inspection of a damaged object;
Fig. 6 shows in panels a) and b) two proposals by an insuarnce company after the damage has been assessed and evaluated.

In the following description the invention is described with reference to the example of a car accident. This, however, should only illustrate and not limit the invention, as the invention preferably more generally applies to the automated detection and evaluation of damage in objects and preferably an automated support of users when handling an accident.

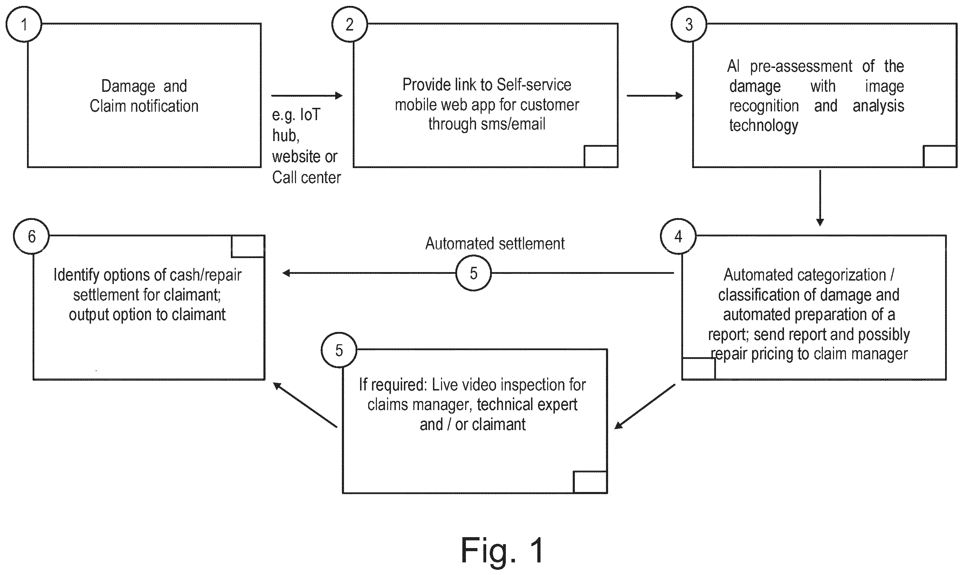

When a user, e.g. a claimant/policyholder (who can be a car owner or driver, homeowner, rental, item owner, etc.) has had an accident with his car/property/object and wants to report the damage/claim, he/she notifies a second user, e.g. he or she enters information into a website, calls or writes to the call center of the responsible insurance company. This is illustrated in Step 1 of Fig. 1. Alternatively, taking advantage of the increased possibilities offered by the internet of things (IoT), the notification of the second user can occur automatically, e.g. by the electronic device of the first user automatically contacting the responsible insurance company to report a damage if sensor data from sensors present in or at the car indicate that an accident has occurred.

Once the case is registered by the second user, e.g. the claims/case/fleet/agent manager in the insurance company claims/case/fleet system, the manager sends a unique web link with a picture application via SMS or email to the claimant in real time. This is illustrated in Step 2 of Fig. 1.

After receiving the link via SMS or email, the claimant clicks/opens the link and activates the mobile picture application on their personal device, e.g. mobile phone or PC, through web browser to acquire images. The claimant does not have to install any application on his / her device or register by setting up a user account, because the picture application is operated as a web browser.

Using the picture application, the claimant takes pictures (or a video) of the car/property/object, providing an entire view of the damaged object and / or focusing on damaged parts of it. He/she also has a possibility to review his/her claim details on that page and to follow/track the claim status without installing any app on his/her device (smartphone or tablet).

The pictures (or video) are being captured by the claimant preferably using a dynamic or static virtual frame or outline and/or other augmented reality technologies that preferably adapt to the object (Augmented Reality technologies) and enable the claimant to capture pictures (or a video) easily in best angle, focus, distance and view.

After capturing the pictures and tipping the SEND button, the pictures and details regarding the object and / or damage and / or insurance policy input by the user (e.g. location and type of damage and / or damaged object) are being sent to the (image) processing unit (also referred to as an Al computer vision damage evaluation engine) and preferably to the insurance company claims system in real time.

The image processing unit / Al computer vision damage evaluation engine identifies areas of damage and evaluates the severity of damages and calculates costs associated with the repair of identified damages based on the submitted pictures (or video) and other details in almost real-time. This is illustrated in Steps 3 and 4 of Fig. 1. Preferably, a three-dimensional model of the damaged object is constructed that is subsequently analysed by the image processing unit.

Once the identification and evaluation of damages by the image processing unit is completed, a user, e.g. the claims manager of the insurance company, can review all the captured information, automated pre-analysis of the damage by the image processing unit including a cost estimate for repair on a device such as a laptop, mobile device, smartphone or PC (or any other suitable device). The claims manager can download or send this information to any email.

The claims manager then reviews and assesses the case based on the Al-based pre-analysis and makes a decision regarding the claim. If the claims manager needs an additional inspection and/or verification, he/she can arrange a live video inspection. This is illustrated in Step 5 of Fig. 1.

In order to perform such a remote video inspection, the claims manager sets up an appointment with the claimant and activates a live video inspection platform sending to the claimant an unique link via SMS or email. The claimant can open the link on his/her smartphone or tablet or PC and can start the live video call/inspection without installing any app on his/her device.

During the remote live inspection, the claims manager is able to see through the claimant smartphone's camera (or camera of any other device access is granted to) without an onsite visit and can take additional pictures of the damage/object independently at any time during the video inspection, preferably by directly operating the camera, which are then being saved in the system for further processing.

During the live inspection, image analysis of the video stream / images acquired can be performed by the processing unit to automatically detect damages concurrent to the assessment by the human expert. In addition to that, augmented reality techniques can be incorporated into the live inspection, e.g. by displaying a dynamic frame that traces the outline / contour of objects and / or areas of damage identified in the images.

After the live video inspection, the claims manager completes the claims process, issuing a final claim settlement.

The claimant receives a final decision (cash/repair settlement proposal) together with a reasoning of the decision, is prompted to sign the settlement proposal issued by the insurance company and receive the financial compensation or proceed with the repairs to complete the closure of the case. This is illustrated in Step 6 of Fig. 1.

In this step, the user can be provided with a direct access link, preferably a deep link, guiding the user directly to a document to sign and / or allowing the user to directly access a report or settlement proposal. This saves the user unnecessary effort compared to a case in that for example, these documents are sent as pdf-attachments in an email.

In yet other words, the present disclosure according to the exemplary embodiment described above provides a platform that brings together claimants (e.g. the owner of a damaged car) and claims managers at insurance companies by providing a platform structuring and organizing communication between the claimant and the claims manager and providing a rapid pre-analysis of the damage occured by means of an automated image analysis drawing on artificial intelligence (AI) and / or deep learning technicques.

The present disclosure can encompass the provision of designated communication modules or communication channels provided to the users, e.g. to the claims manager and / or the claimant.

For example, after receiving a first notice of loss (FNOL) from a claimant, e.g. a car owner after a car accident, the claims manager registers the claim case in their own insurance company claims system/platform with a connected communication module that allows the claims manager to communicate according to a method of the present invention. The claims manager thus has the possibility to access a system according to the present disclosure directly from his/her desktop computer, tablet or laptop (or any other suitable device) through their claims system/platform or through a designated communication module.

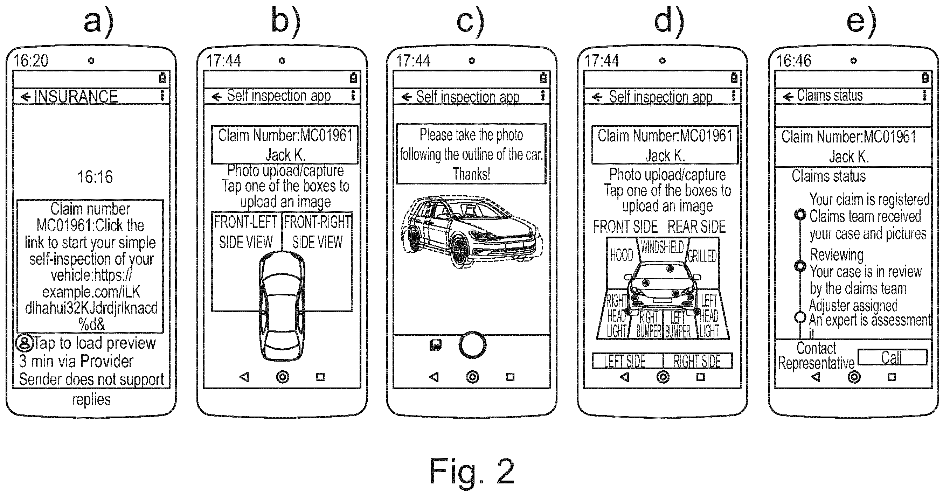

From this claims system/platform the claims manager for example sends a web link via web service over the internet, through SMS or email to the claimant, who then uses his/her smartphone or tablet to open the SMS or email and to initiate the picture application on the web browser as described above. This is illustrated in panel a) of Fig. 2. In the context of the present invention, the term link can preferably refer to a deep link.

The claimant then takes pictures (or video) with the integrated camera of his device and the pictures (or video) are preferably being captured with guidance of Augmented Reality technologies (AR), for example a corresponding frame/outline that adapts to the object, to enable the best angle, focus, distance and view of the object. This is illustrated in panels b) and c) of Fig. 2.

After the user confirms the sending of the pictures (or video), those are transmitted through the internet to a cloud server. This is illustrated in panel d) of Fig. 2.

During the entire handling of the damage claim, each user can preferably access a timeline or status-update showing the progress of the case. This is illustrated in panel e) of Fig. 2.

The image processing unit / Al based damaged evaluation engine described above preferably runs on the cloud server. In other words, the functionality of the processing unit can be implemented in a cloud server. In other words, the cloud GPU server/machine has Al computer vision, machine learning and / or deep learning capability that can analyse pictures (or video) and identify which part of the car/property/object has the damage, where the damage is, size of the damages, what the severity of the damage is, etc. The results of this automated Al-based image analysis are also referred to as AI results.

Alternatively or additionally, the image processing unit / Al based damaged evaluation engine described above can run on an electronic device, such as a mobile device or smartphone of a user. In that case, the GPU of the electronic device, such as a mobile device or smartphone of a user, has Al computer vision, machine learning and / or deep learning capability that can analyse pictures (or video) and identify which part of the car/property/object has the damage, where the damage is, size of the damages, what the severity of the damage is, etc

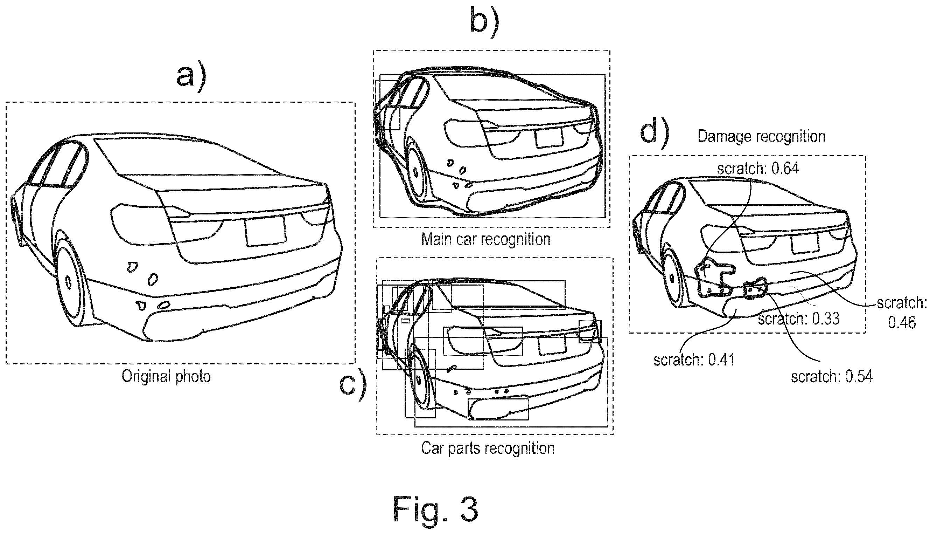

The analysis of the images by the image processing unit / Al based damaged evaluation engine is illustrated in Fig. 3. Panel a) of Fig. 3 shows an image of a damaged object, in this case of a car. In a first step, the image processing unit identifies the object of interest, in this case the car in the image. This is shown in panel b) of Fig. 3. Subsequently, several parts or components of the car are identified, e.g. a bumper, a tyre, an indicator, windows etc. as shown in panel c) of Fig. 3. In another step, areas of damage are identified and classified according to the type of damage (e.g. "scratch") and the severity of the damage is indicated by a numerical value juxtaposed to the type of damage as shown in panel d) of Fig. 3.

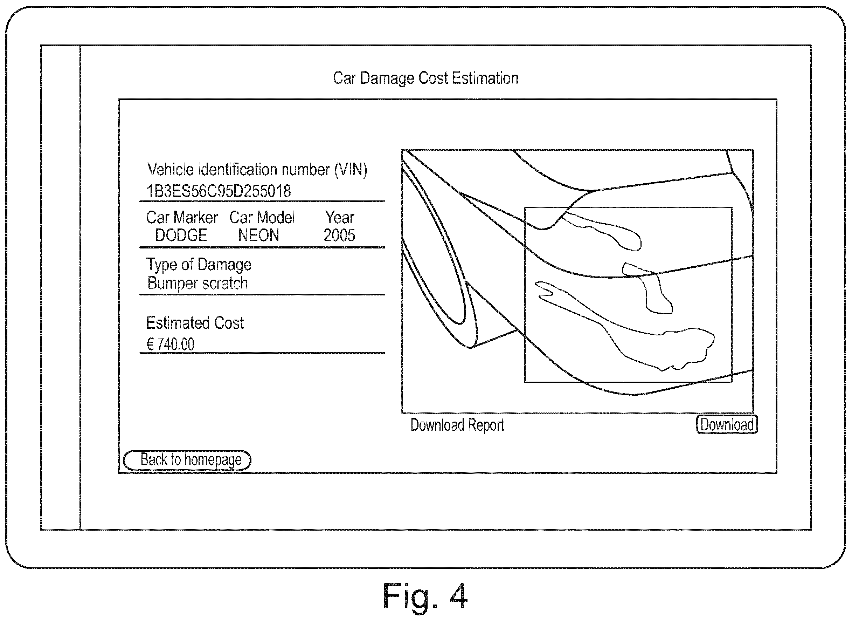

The parameters of the Al results can be sent to a pricing database system where they can be used to determine the pricing information of the replacement or repair of the object, its labor time, materials, parts and possible labor rate to treat the damaged object. The system according to the present invention can output a cost estimate of the repair of an identified damage to a user as illustrated in Fig. 4.

After the pictures (or video) have been analysed by the image processing unit / Al based damaged evaluation engine, an Al generated assessment report or pre-analysis report preferably with the pictures (or video) is sent to the insurance company claims system/platform for the manager to review, then make decisions for the next step. The claims manager can access the report/pictures (or video)/information through their PC/mobile/tablet or any other suitable device.

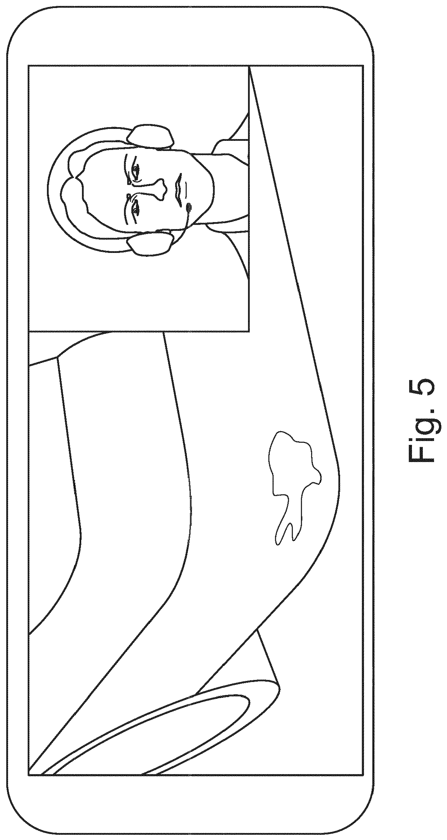

After reviewing and assessing the case, the claim manager can decide if it is necessary acquire more information regarding the damage to come to a conclusion, e.g. whether a live video inspection with the claimant has to be set up. An examplary screen shot taken from a mobile device of e.g. of a car owner after a car accident illustrating such a live video inspection is shown in Fig. 5. The human expert is shown in the small inset image.

Such a live video inspection can be done by activating a live video inspection platform, which is preferably integrated with the insurance company claims system and which allows the claim manager to access mobile devices (smartphones or tablets) regardless of location for inspection purposes.

The live video inspection platform preferably can be used on the usual operating systems of mobile devices and / or other suitable devices, regardless of the version of these operating systems and regardless of which web browser is used by a device. Similar to the picture application, the video call can be activated from the insurance company claims system/platform, when the claims manager sends a web link via web service through SMS or email to the claimant over the internet. The video call can be activated directly in the system by the claimant or optionally via a calendar function at a specified time.

The video call allows the claim manager to communicate with the claimant and at the same time to access the camera function of the device of the claimant so that he/she can perceive the environment in real time online in a live stream and, if necessary, capture particular images or activate video recording. For reasons of quality, the high definition pictures are always acquired via smartphone camera and are not screenshots of the video call.

The captured pictures preferably together with the geographic coordinates recorded at the same time, including the address data corresponding to these coordinates, are being sent to the claim manager, e.g. to his / her email address in report form (e.g. PDF) on request. If necessary, the claim manager can download all photos to a local device (laptop / PC / tablet) for further processing.

Based on this information, the claims manager provides the claimant, e.g. the car owner, with a settlement proposal via the platform according the present invention.

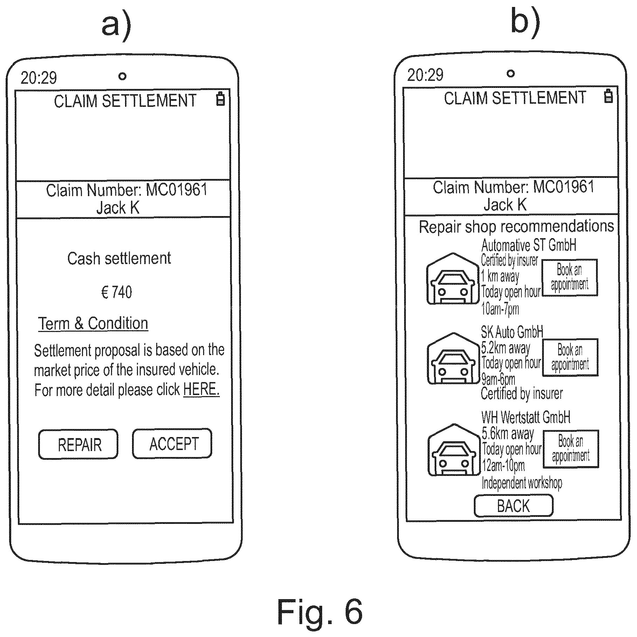

This settlement proposal can take the form of a cash settlement or financial compensation as illustrated in panel a) of Fig. 6 or a repair settlement including the recommendation of a suitable repair workshop as illustrated in panel b) of Fig. 6.

In the following, the image processing unit / Al damage evaluation engine will be described in more detail.

According to an exemplary embodiment, the image processing unit comprises a convolutional neural network preferably running on a cloud server and employing deep learning technicques to analyze images or a video of an object to identify one or multiple areas of damage of the object.

The convolutional neural network preferably is a Region Based Convolutional Neural Network (R-CNN) that is adapted for computer vision and specifically object detection. To increase efficiency of image analysis, the convolutional neural network can be configured as a Mask R-CNN that uses anchor boxes to detect multiple objects, objects of different scales, and overlapping objects in an image. This improves the speed and efficiency for object detection.

The convolutional neural network may employ the technique of Detecting Objects with Recursive Feature Pyramid and Switchable Atrous Convolution (DetectoRS) in order to improve speed and accuracy of object recognition, e.g. in detecting objects such as a car, carpart, scratch, dent and crack in an image or a three-dimensional model of a damaged object constructed from such images.

The convolutional neural network may further employ a YOLOv4 technique, YOLOv7 or similar technique (e.g. YOLOvX, wherein X indicates a given version), to improve on the performance and speed of the object recognition in the image analysis. Neural Radiance Field (NERF) technique may be employed for a regeneration and construction of the images of poor quality to improve the accuracy of segmentation of the objects in the picture.

In order to combine multiple images of the same object, keypoints or reference points may be identified in the images that are used to stitch several images together and / or to construct a model of the object. This keypoint matching technique can thus be used to combine multiple photos with different viewpoints of the same object.

For example, 10 pictures of a damaged object taken in different distances and angles can be combined / integrated with each other to provide a more complete image or model of the object. A 3D-reconstruction of the damaged object may be performed: with the help of keypoints, multiple images of the same object can be used to reconstruct the imaged object in a 3D model.

In order to ensure accuracy of the automated image analysis, images acquired by a user could be first analysed regarding their quality to determine whether these images are suitable for analysis by the image processing unit. Such a preprocessing or pre-selection step of images could involve images being analysed to determine if the pictures are in good quality, for example by detecting blurriness, reflection, low lighting, and whether a main object of interest is present in the picture (e.g. if the images only depicts background and not a damaged car). Such a pre-selection step is preferably also performed automatically, prior to the actual image analysis performed by the convolutional neural network.

In other words, a method according to the present invention preferably includes a step of selecting or pre-selecting from a plurality of images acquired from an object, at least two images for constructing a three-dimensional model of the object.

The pre-selection step may also involve a plausibility check based on the other data submitted by the user, e.g. if the user submitted that the image relates to a car accident and the image shows only a blurry blue sky, it is likely that the user only accidentally submitted this image.

To further ensure accuracy, after the actual image analysis by the image processing unit / convolutional neural network, a post-processing step may be performed. This step can also take the form of a plausibility check and may involve the use of a case adaptation algorithm where it would fit into the use cases. For example, overlapped damages on different parts of the object may have been detected. **In** this case, the analysis or evaluation data regarding all these different damages are checked against each other in the post-processing step to ensure consistentency and accuracy of the analysis results (is such a pattern of damages plausible?).

Based on many objects increasingly being equipped with sensors (Internet of things (loT)), sensor data from the damaged object, e.g. vehicle, from smart home devices etc. are valuable data to determine the causes of the damages and thus can be used to enhance the accuracy of the prediction and evaluation of damages.

For example, in case of a car accident, sensor data regarding vehicle speed, direction, acceleration and impact can be measured and taken into account during the damage analysis and evaluation performed by the convolutional neural network, e.g. by the image processing unit. For building or home damages, for example, data stemming from humidity sensors and / or heat sensors and / or anti-theft systems are relevant data.

Data stemming from external sensors can also be used to perform a plausibility check on areays and / or types of damages identified based on the ananylsis of the three-dimensional model by the convolutional neural network.

Another optional step in the image analysis is a before and after comparison. Due to the simple and convenient process of acquiring digital images, it is easy to access pictures (or videos) of an object before the object was damaged. This enables a comparison of the images taken of an object before and after damage of the object being performed by the image processing unit or convolutional neural network.

## Claims

1. Method for identifying and / or evaluating a damage in an object, comprising the steps:
- acquiring at least two images of the object,
- electronically constructing a three-dimensional model of the object, analyzing the three-dimensional model of the object by means of a convolutional neural network to identify and / or evaluate at least one area of damage to the object, **characterised in that** the method is performed by a web application and the method further comprises a fraud detection step **in that** every image to be analysed for the presence of damage is first checked by means of a processing unit to identify manipulated pixels and comprising a pixel-based abnormality detection step being applied to each image to detect manipulated images to identify at least one pixel that due to a characteristic, preferably lighting, hue of colours, does not fit in with the other pixels of an image, wherein the processing unit is configured to assess for at least one pixel of at least one image acquired of an object, whether the characteristics of this pixel are consistent with the characteristics of at least one other pixel of the image, and if an inconsistency is detected, output an alert to a user indicating a possibly fraudulent image .

2. Method according to claim 1, wherein the object is a building, a vehicle, a mobile device, an electronic device, furniture or any other object or part thereof.

3. Method according to one of claims 1 or 2, further comprising the step of performing a remote live inspection allowing at least one user to view the object in real time and preferably also allowing the at least one user to remotely acquire images of the object, preferably by directly accessing a camera of a mobile device.

4. Method according to one of the preceding claims, wherein in the step of analyzing the three-dimensional model of the object by means of a convolutional neural network to identify and / or evaluate at least one area of damage to the object, sensor data originating from sensors at or in the object and / or from sensors associated with the object are taken into account.

5. Method according to one of the preceding claims, wherein in the step of acquiring the at least two images an augmented reality technique is used to guide a user in taking adequate images, preferably by displaying a dynamic virtual frame superimposed on the image to be acquired indicating a desired position of the object in the picture, wherein the dynamic virtual frame preferably adapts in real time to the position of the object and / or the user.

6. Method according to claim 3, wherein in the step of performing a remote live inspection an augmented reality technique is used to display data regarding at least one identified area of damage to the user superimposed and / or juxtaposed to the damaged object, wherein the data relates to a dimension, size, depth, outline, severity, age, the cost associated with a repair of the damage or any other information regarding the area of damage and preferably comprises a severity score indicating the severity of the damage.

7. Method according to one of the preceding claims, wherein an area of damage identified is classified according to damage type, e.g. as a scratch, a crack, an indentation, an abrasion, a discoloration, a coating or any other type of damage and preferably, the area of damage is further classified into a category of severity.

8. Method according to one of the preceding claims, wherein the method further comprises the step of evaluating the cost associated with the repair of an identified area of damage and preferably a step of giving an output to a user indicating at least one offer of repair for the identified area of damage.

9. Method according to claim 8, wherein the best offer of repair relates to the most economical possibility of repair or workshop and / or the possibility of repair or workshop located closest to the object the damage has been identified in.

10. Method according to one of the preceding claims, wherein instead of the at least two pictures a video of the object is acquired.

11. Device, in particular processing unit, configured to perform a method according to one of the preceding claims.

12. Device, in particular data storage device, comprising computer-readable instructions that instruct a computer to perform a method according to one of claims 1- 10.

13. System comprising at least one mobile device and another device, preferably another mobile device, wherein the at least one mobile device and the other device are configured to communicate with each other to perform a method according to one of claims 1- 10.

## Patentansprüche

1. Verfahren zum Identifizieren und/oder Bewerten eines Schadens an einem Objekt, umfassend die Schritte:
- Erfassen von zumindest zwei Bildern des Objekts,
- elektronisches Konstruieren eines dreidimensionalen Modells des Objekts,
- Analysieren des dreidimensionalen Modells des Objekts vermittels eines Convolutional Neural Network, um zumindest einen Schadensbereich des Objekts zu identifizieren und/oder zu bewerten,
**dadurch gekennzeichnet, dass** das Verfahren durch eine Webanwendung ausgeführt wird und das Verfahren ferner einen Betrugserkennungsschritt umfasst, bei dem jedes auf das Vorhandensein eines Schadens zu analysierende Bild zunächst mittels einer Verarbeitungseinheit überprüft wird, um manipulierte Pixel zu identifizieren, und einen pixelbasierten Anomalieerkennungsschritt umfasst, der auf jedes Bild angewendet wird, um manipulierte Bilder zu erkennen, um zumindest ein Pixel zu identifizieren, das aufgrund einer Eigenschaft, bevorzugt Beleuchtung, Farbton von Farben, nicht zu den anderen Pixeln eines Bildes passt, wobei die Verarbeitungseinheit dazu eingerichtet ist, für zumindest ein Pixel zumindest eines von einem Objekt erfassten Bildes zu beurteilen, ob die Eigenschaften dieses Pixels mit den Eigenschaften zumindest eines anderen Pixels des Bildes übereinstimmen, und, wenn eine Inkonsistenz erkannt wird, eine Warnung an einen Benutzer auszugeben, die auf ein möglicherweise betrügerisches Bild hinweist.

2. Verfahren nach Anspruch 1, wobei das Objekt ein Gebäude, ein Fahrzeug, ein mobiles Gerät, ein elektronisches Gerät, Möbel oder ein beliebiges anderes Objekt oder ein Teil davon ist.

3. Verfahren nach einem der Ansprüche 1 oder 2, ferner umfassend den Schritt des Durchführens einer Live-Ferninspektion, die es zumindest einem Benutzer ermöglicht, das Objekt in Echtzeit zu betrachten, und bevorzugt auch dem zumindest einen Benutzer ermöglicht, aus der Ferne Bilder des Objekts zu erfassen, bevorzugt durch direkten Zugriff auf eine Kamera eines mobilen Geräts.

4. Verfahren nach einem der vorstehenden Ansprüche, wobei in dem Schritt des Analysierens des dreidimensionalen Modells des Objekts vermittels eines Convolutional Neural Network, um zumindest einen Schadensbereich des Objekts zu identifizieren und/oder zu bewerten, Sensordaten berücksichtigt werden, die von Sensoren an oder in dem Objekt und/oder von Sensoren stammen, die dem Objekt zugeordnet sind.

5. Verfahren nach einem der vorstehenden Ansprüche, wobei in dem Schritt des Erfassens der zumindest zwei Bilder eine Augmented-Reality-Technik verwendet wird, um einen Benutzer beim Aufnehmen geeigneter Bilder zu führen, bevorzugt durch Anzeigen eines dynamischen virtuellen Rahmens, der dem zu erfassenden Bild überlagert ist und eine gewünschte Position des Objekts im Bild anzeigt, wobei sich der dynamische virtuelle Rahmen bevorzugt in Echtzeit an die Position des Objekts und/oder des Benutzers anpasst.

6. Verfahren nach Anspruch 3, wobei in dem Schritt des Durchführens einer Live-Ferninspektion eine Augmented-Reality-Technik verwendet wird, um dem Benutzer Daten hinsichtlich zumindest eines identifizierten Schadensbereichs überlagert und/oder neben dem beschädigten Objekt anzuzeigen, wobei sich die Daten auf eine Abmessung, Größe, Tiefe, Kontur, Schwere, Alter, die mit einer Reparatur des Schadens verbundenen Kosten oder beliebige andere Informationen hinsichtlich des Schadensbereichs beziehen und bevorzugt einen Schweregradwert umfassen, der die Schwere des Schadens angibt.

7. Verfahren nach einem der vorstehenden Ansprüche, wobei ein identifizierter Schadensbereich nach Schadensart klassifiziert wird, z. B. als Kratzer, Riss, Vertiefung, Abrieb, Verfärbung, Beschichtung oder eine beliebige andere Art von Schaden, und bevorzugt der Schadensbereich ferner in eine Schweregradkategorie klassifiziert wird.

8. Verfahren nach einem der vorstehenden Ansprüche, wobei das Verfahren ferner den Schritt des Bewertens der mit der Reparatur eines identifizierten Schadensbereichs verbundenen Kosten und bevorzugt einen Schritt des Ausgebens einer Ausgabe an einen Benutzer umfasst, die zumindest ein Reparaturangebot für den identifizierten Schadensbereich angibt.

9. Verfahren nach Anspruch 8, wobei sich das beste Reparaturangebot auf die wirtschaftlichste Reparaturmöglichkeit oder Werkstatt und/oder auf die Reparaturmöglichkeit oder Werkstatt bezieht, die dem Objekt, an dem der Schaden identifiziert wurde, am nächsten gelegen ist.

10. Verfahren nach einem der vorstehenden Ansprüche, wobei anstelle der zumindest zwei Bilder ein Video des Objekts erfasst wird.

11. Vorrichtung, insbesondere Verarbeitungseinheit, die dazu eingerichtet ist, ein Verfahren nach einem der vorstehenden Ansprüche durchzuführen.

12. Vorrichtung, insbesondere Datenspeichervorrichtung, umfassend computerlesbare Anweisungen, die einen Computer anweisen, ein Verfahren nach einem der Ansprüche 1 - 10 durchzuführen.

13. System, umfassend zumindest ein mobiles Gerät und eine weitere Vorrichtung, bevorzugt ein weiteres mobiles Gerät, wobei das zumindest eine mobile Gerät und die weitere Vorrichtung dazu eingerichtet sind, miteinander zu kommunizieren, um ein Verfahren nach einem der Ansprüche 1 - 10 durchzuführen.

## Revendications

1. Procédé d'identification et/ou d'évaluation d'un dommage dans un objet, comprenant les étapes consistant à :
- acquérir au moins deux images de l'objet,
- construire électroniquement un modèle tridimensionnel de l'objet,
analyser le modèle tridimensionnel de l'objet au moyen d'un réseau neuronal convolutif afin d'identifier et/ou d'évaluer au moins une zone de dommage de l'objet,
**caractérisé en ce que** le procédé est exécuté par une application web et **en ce que** le procédé comprend en outre une étape de détection de fraude dans laquelle chaque image devant être analysée quant à la présence d'un dommage est d'abord vérifiée au moyen d'une unité de traitement afin d'identifier des pixels manipulés, et comprenant une étape de détection d'anomalie basée sur les pixels qui est appliquée à chaque image afin de détecter des images manipulées pour identifier au moins un pixel qui, en raison d'une caractéristique, de préférence l'éclairage, la teinte des couleurs, ne s'accorde pas avec les autres pixels d'une image, dans lequel l'unité de traitement est configurée pour évaluer, pour au moins un pixel d'au moins une image acquise d'un objet, si les caractéristiques de ce pixel sont cohérentes avec les caractéristiques d'au moins un autre pixel de l'image, et, si une incohérence est détectée, émettre une alerte à un utilisateur indiquant une image possiblement frauduleuse.

2. Procédé selon la revendication 1, dans lequel l'objet est un bâtiment, un véhicule, un dispositif mobile, un dispositif électronique, un meuble ou tout autre objet ou une partie de celui-ci.

3. Procédé selon l'une des revendications 1 ou 2, comprenant en outre l'étape consistant à effectuer une inspection en direct à distance permettant à au moins un utilisateur de visualiser l'objet en temps réel et permettant de préférence également audit au moins un utilisateur d'acquérir à distance des images de l'objet, de préférence en accédant directement à une caméra d'un dispositif mobile.

4. Procédé selon l'une des revendications précédentes, dans lequel, dans l'étape d'analyse du modèle tridimensionnel de l'objet au moyen d'un réseau neuronal convolutif afin d'identifier et/ou d'évaluer au moins une zone de dommage de l'objet, des données de capteurs provenant de capteurs au niveau de ou dans l'objet et/ou de capteurs associés à l'objet sont prises en compte.

5. Procédé selon l'une des revendications précédentes, dans lequel, dans l'étape d'acquisition des au moins deux images, une technique de réalité augmentée est utilisée pour guider un utilisateur dans la prise d'images adéquates, de préférence en affichant un cadre virtuel dynamique superposé à l'image à acquérir indiquant une position souhaitée de l'objet dans l'image, dans lequel le cadre virtuel dynamique s'adapte de préférence en temps réel à la position de l'objet et/ou de l'utilisateur.

6. Procédé selon la revendication 3, dans lequel, dans l'étape consistant à effectuer une inspection en direct à distance, une technique de réalité augmentée est utilisée pour afficher à l'utilisateur des données concernant au moins une zone de dommage identifiée, superposées et/ou juxtaposées à l'objet endommagé, dans lequel les données se rapportent à une dimension, une taille, une profondeur, un contour, une gravité, un âge, aux coûts associés à une réparation du dommage ou à toute autre information concernant la zone de dommage et comprennent de préférence un score de gravité indiquant la gravité du dommage.

7. Procédé selon l'une des revendications précédentes, dans lequel une zone de dommage identifiée est classifiée selon le type de dommage, par exemple comme une rayure, une fissure, une indentation, une abrasion, une décoloration, un revêtement ou tout autre type de dommage et, de préférence, la zone de dommage est en outre classifiée dans une catégorie de gravité.

8. Procédé selon l'une des revendications précédentes, dans lequel le procédé comprend en outre l'étape consistant à évaluer le coût associé à la réparation d'une zone de dommage identifiée et, de préférence, une étape consistant à fournir une sortie à un utilisateur indiquant au moins une offre de réparation pour la zone de dommage identifiée.

9. Procédé selon la revendication 8, dans lequel la meilleure offre de réparation se rapporte à la possibilité de réparation ou à l'atelier le plus économique et/ou à la possibilité de réparation ou à l'atelier situé le plus près de l'objet dans lequel le dommage a été identifié.

10. Procédé selon l'une des revendications précédentes, dans lequel, à la place des au moins deux images, une vidéo de l'objet est acquise.

11. Dispositif, en particulier unité de traitement, configuré pour exécuter un procédé selon l'une des revendications précédentes.

12. Dispositif, en particulier dispositif de stockage de données, comprenant des instructions lisibles par ordinateur qui instruisent un ordinateur d'exécuter un procédé selon l'une des revendications 1 à 10.

13. Système comprenant au moins un dispositif mobile et un autre dispositif, de préférence un autre dispositif mobile, dans lequel ledit au moins un dispositif mobile et l'autre dispositif sont configurés pour communiquer entre eux afin d'exécuter un procédé selon l'une des revendications 1 à 10.
